# EUROPÄISCHE PATENTSCHRIFT

(11) **EP 2 300 725 B1**
(45) Veröffentlichungstag und Bekanntmachung des Hinweises auf die Patenterteilung: **10.04.2019**
(21) Anmeldenummer: 09768817.0
(22) Anmeldetag: 19.05.2009
(51) Int. Cl.: F16C 19/28, F16C 33/60, F16C 33/34

(54) **LAGER, INSBESONDERE RADSATZLAGER FÜR BAHNRÄDER**
BEARING, IN PARTICULAR WHEEL SET BEARING FOR RAILWAY WHEELS
PALIER, EN PARTICULIER BOÎTE D'ESSIEU POUR ROUES FERROVIAIRES

(30) Priorität: 27.06.2008 DE 102008025595
(43) Veröffentlichungstag der Anmeldung: 30.03.2011
(73) Patentinhaber: Schaeffler Technologies AG & Co. KG, 91074 Herzogenaurach (DE)
(72) Erfinder: PAUSCH, Michael, 97464 Oberwerrn (DE); THOMAS, Stephan, 97456 Dittelbrunn (DE)
(86) Internationale Anmeldenummer: PCT/DE2009/000696
(87) Internationale Veröffentlichungsnummer: WO 2009/155893

(56) Entgegenhaltungen:
- EP-A1- 1 632 685
- EP-A2- 1 006 288
- DE-A1- 2 430 609
- FR-A- 1 142 631

## Beschreibung

### Gebiet der Erfindung

Die Erfindung betrifft ein Lager nach Anspruch 1, insbesondere ein Radsatzlager, speziell ein Radsatzlager für Bahnräder.

Radsatzlager für Bahnräder von insbesondere Schienenfahrzeugen sind üblicherweise als zweireihige Lager mit zylindrischen oder kegeligen Wälzkörpern ausgebildet. Die zweireihigen Lager können durch zwei aneinander angrenzende einreihige Lager mit jeweils zylindrischen Wälzkörpern ausgebildet werden, wobei die zylindrischen Wälzkörper als Vollzylinder ausgebildet sind und eine ebene Stirnfläche aufweisen. Mit der ebenen Stirnflächen liegen die Wälzkörper mindestens einer der zwei oder mehr Reihen an einem Bord an, der an einem axialen Ende als radial abgestellter Abschnitt eines der Lagerringe der Lager, speziell des Innen- oder Außenrings eines der beiden Lager, ausgebildet ist. Radsatzlager für Bahnräder von Schienenfahrzeugen sind üblicherweise fettgeschmiert und umfassen ein Fettreservoir, das mit der Zeit bei Belastung ein Grundöl als Schmiermittel freisetzt. In der Praxis hat sich gezeigt, dass die Lebensdauer des Fettreservoirs die entscheidende Größe ist, die die Wartungsintervalle des Radsatzlagers bestimmt. Insbesondere ein Wärmeeintrag, speziell durch Reibungswärme, setzt die Lebensdauer des Fettreservoirs herab und erfordert eine Erneuerung des Fettreservoirs in vergleichsweise kurzen Wartungsintervallen.

Um die Reibung zwischen den Wälzkörpern und dem Bord herabzusetzen, ist bekannt, den Bord anzuschrägen und die Kante an der Stirnfläche der zylindrischen Wälzkörper abgerundet auszubilden. Bei dem Einlaufen der Radsatzlager drückt die abgerundete Kante auf den angeschrägten Bord, so dass ein im wesentlichen linienförmiger Presskontakt entsteht und ein durchgehender Schmierfilm zwischen der angeschrägten Fläche des Bordes und der abgerundeten Kante der Stirnfläche des Wälzkörpers nicht ausgebildet werden kann. Durch eine erhöhte Reibung zwischen dem Bord und der Stirnfläche des Wälzkörpers wird die Kante der Stirnfläche so ausgeformt, dass die Reibung zwischen der Fläche des Bordes und der Stirnfläche herabgesetzt wird, allerdings geht dieser Prozess mit einem erheblichen Wärmeeintrag einher, der das Fettreservoir bereits während des Einlaufens des Lagers deutlich altern lässt und ein kurzes Wartungsintervall erforderlich macht. Die erhöhte Reibung fördert auch die Freisetzung von Abrieb in Form von Partikeln, die die Qualität der Schmierung ebenfalls herabsetzen.

Die FR 1 142 631 A beschreibt ein zweireihiges Lager mit einem Innenring, einem Außenring, zwei Reihen von zylindrischen Wälzkörpern und eine Bordscheibe. Die Wälzkörper weisen eine kalottenförmige Stirnfläche auf.

Die DE 24 30 609 A1 offenbart ein Radlager mit zwei Reihen von zylindrischen Wälzkörpern, die kalottenförmige Stirnflächen aufweisen und an den Borden der Lagerringe anliegen.

Die EP 1 006 288 A2 beschreibt ein Radlager mit zwei reihen von zylindrischen Wälzkörpern, wobei die Wälzkörper ebene Stirnflächen aufweisen und an Borden anliegen.

### Aufgabe der Erfindung

Es ist die Aufgabe der Erfindung, ein Lager, insbesondere ein Radsatzlager speziell für Schienenfahrzeuge mit einer Fettschmierung anzugeben, das längere Wartungsintervalle ermöglicht.

### Zusammenfassung der Erfindung

Diese Aufgabe wird erfindungsgemäß durch ein Lager nach Anspruch 1 gelöst, beispielsweise durch eine Verwendung eines solchen Lagers gemäß Anspruch 5 als Radsatzlager, speziell für Bahnradlager.

Ein zylindrischer Wälzkörper mit torusballiger Stirnfläche ist ein solcher rotationssymmetrischer Wälzkörper, der eine konvex nach außen gekrümmte Stirnfläche in einem an die Mantelfläche angrenzenden Bereich der Stirnfläche aufweist, wobei der gedachte Krümmungsradius einen Abstand von der Drehachse des Wälzkörpers einhält, und wobei zwischen den gekrümmten Randbereichen der Stirnflächen ein flacher oder gar ebener Bereich vorgesehen ist, durch den die Drehachse des Wälzkörpers tritt. Die Krümmung ist dabei sphärisch. In einer perspektivischen Ansicht ist dabei an der Stirnfläche eine randseitige Wulst erkennbar, die eine mittige Vertiefung an der Stelle einer Rotationsachse des Wälzkörpers umgibt, so dass die Balligkeit der Stirnfläche umlaufend (nach Art eines Ringes bzw. Torus) ausgebildet ist. Die torusballige Ausbildung der Stirnfläche des Wälzkörpers hat die Wirkung, dass ein Kontaktpunkt mit einem Bord bzw. einer Bordscheibe radial weg von einer parallel zu der Rotationsachse liegenden Kante versetzt ist. Derartige Wälzkörper mit torusballiger Stirnfläche sind aus den Schriften DE 10 2005 061 103 A1 und DE 10 2005 061 102 A1, auf die insoweit ausdrücklich Bezug genommen wird, grundsätzlich bekannt, wobei die torusballige Ausbildung der Stirnfläche aufgrund der konvexen Krümmung im Randbereich der Stirnfläche den Vorteil bietet, einen nur flächigen Kontakt bei einer gleichzeitig guten Förderung eines Schmiermittels durch einen engen Spalt zwischen der Fläche des Bordes bzw. der Bordscheibe und der Oberfläche der Stirnfläche zu ermöglichen. Weiter wird der ellipsenförmige Kontaktpunkt zwischen der Oberfläche der Stirnfläche und der Fläche des Bordes bzw. der Bordscheibe von der Drehachse weg nahe zu der inneren Mantelfläche des Laufrings, an dem der Bord bzw. die Bordscheibe angeordnet ist, verschoben, so dass axiale Kräfte besser aufgenommen werden können.

Bezogen auf zwei- oder mehrreihige Radsatzlager mit Fettreservoir ermöglicht die verringerte Reibung zwischen der Stirnfläche des zylindrischen Wälzkörpers und der Fläche der Bordscheibe einen geringeren Wärmeeintrag in das Fettreservoir während der Zeit des Einlaufens des Lagers, so dass sich die Lebensdauer des Fettreservoirs erhöht und ein längeres Wartungsintervall angesetzt werden kann. Auch bei dem weiteren Betrieb des Lagers, nach dem Einlaufen, ist eine verringerte Reibung zu verzeichnen, so dass längere Wartungsintervalle ermöglicht werden.

Weitere Vorteile und Merkmale der Erfindung ergeben sich aus den abhängigen Ansprüchen sowie aus der Beschreibung von bevorzugten Ausführungsbeispielen.

Die Erfindung wird nachstehend unter Bezugnahme auf die anliegenden Zeichnungen näher beschrieben und erläutert.

### Kurze Beschreibung der Zeichnungen

- Fig. 1: zeigt einen Querschnitt durch ein erstes Ausführungsbeispiel eines erfindungsgemäßen Lagers,
- Fig. 2: zeigt einen Querschnitt durch ein zweites Ausführungsbeispiel eines erfindungsgemäßen Lagers,
- Fig. 3: zeigt einen Querschnitt durch ein drittes Ausführungsbeispiel eines erfindungsgemäßen Lagers, und
- Fig. 4: zeigt einen Querschnitt durch einen torusballigen zylindrischen Wälzkörper, der in den Ausführungsbeispielen aus Fig. 1, Fig. 2 oder Fig. 3 verwendet werden kann.

### Detaillierte Beschreibung der Zeichnung

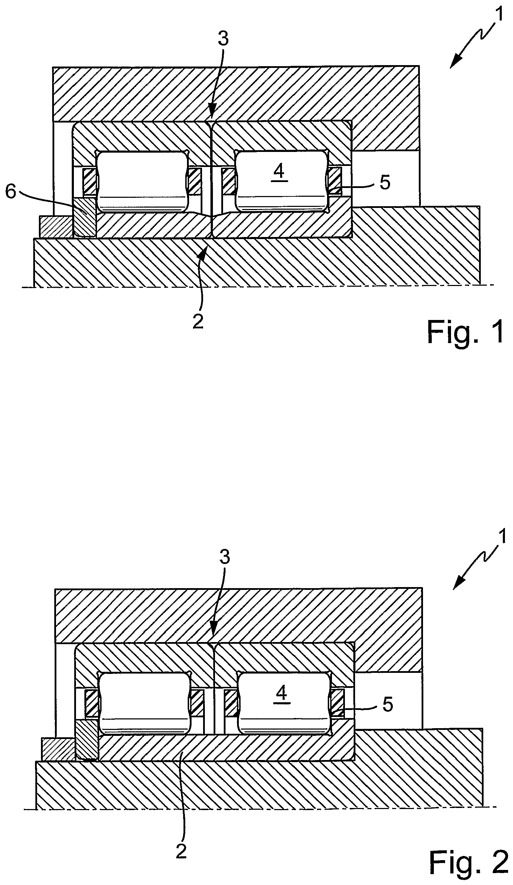

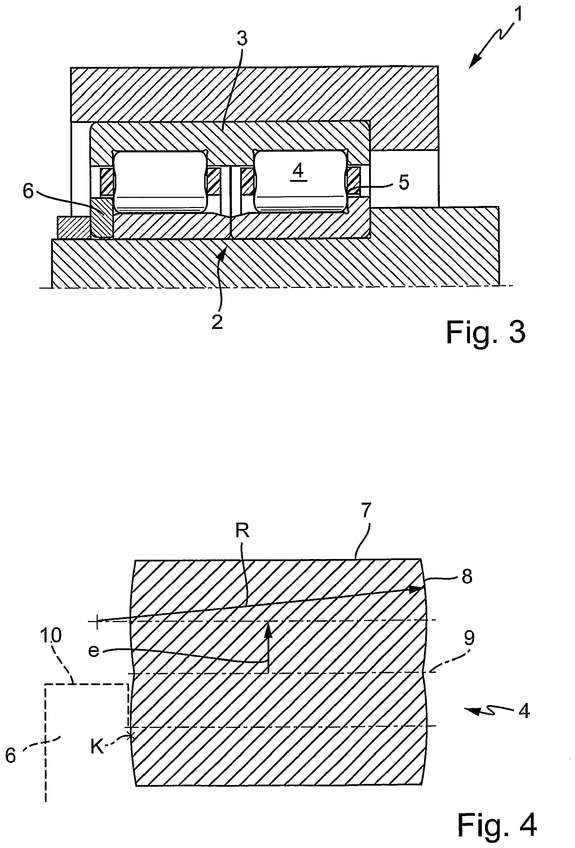

Fig. 1 zeigt ein Radsatzlager 1, speziell ein Radsatzlager für Bahnräder von Schienenfahrzeugen, das einen Innenring 2 und ein einen Außenring 3 umfasst. Das Radsatzlager 1 ist durch zwei axial benachbart und aneinander anliegende Teillager ausgebildet. Das Radsatzlager 1 umfasst zwei Reihen von im Wesentlichen zylindrischen Wälzkörpern 4, wobei jede der beiden Reihen in einem der beiden Teillager angeordnet ist. Die zylindrischen Wälzkörper 4 weisen jeder eine torusballige Stirnfläche 5 auf, wie in Fig. 4 besser erkennbar ist.

Eines der beiden Teillager des Radsatzlagers 1 weist an dem Innenring 2 an dessen Stirnseite eine Bordscheibe 6 auf, die mit der torusballigen Stirnfläche 5 des zugeordneten Wälzkörpers 4 einen elliptischen oder cardioidenförmigen Kontakt von nur sehr geringer Fläche ausbildet. Die Bordscheibe 6 mittels einer Haltemutter oder über die sogenannte Achskappe an dem Lager 1 gehalten.

Die Montage des Radsatzlagers 1 wird derart durchgeführt, dass das Radsatzlager 1 als Einheit bereitgestellt wird, die beiden Außenringe der Teillager an die Lageraufnahme befestigt werden, dann die beiden Innenringe der beiden Teillager an der Welle befestigt werden und abschließend an der Stirnfläche eines der beiden Innenringe die Bordscheibe 6 angeordnet wird, um das Lager 1 abzuschließen. Diese Lagermontage vereinfacht sich, wenn der Außenring 3 oder der Innenring 2, insbesondere jeder von beiden Lagerringen 2, 3 einteilig und nicht als zwei axial benachbarte Teilringe ausgebildet sind.

Fig. 4 zeigt einen Querschnitt durch einen zylindrischen Wälzkörper 4, der eine torusballige Stirnfläche 5 aufweist. Unmittelbar an die Mantelfläche 7 des Korpus des zylindrischen Wälzkörpers 4 schließt sich ein konvex nach außen gekrümmter, im dargestellten Ausführungsbeispiel sphärisch gekrümmter Abschnitt 8 an. Der Krümmungsradius R des sphärisch gekrümmten Abschnittes 8 ist um einen Betrag e von der Rotationsachse 9 des drehsymmetrischen Wälzkörpers 4 versetzt. Im Bereich des Schnittpunktes der Rotationsachse 9 mit der Stirnfläche 5 des Wälzkörpers ist die Stirnfläche 5 vertieft ausgebildet, so dass der gekrümmte Abschnitt 8 nur jeweils an die Mantelfläche 7 angrenzend ausgebildet ist. In einer perspektivischen Ansicht ist an der Stirnfläche 5 eine randseitige Wulst ausgebildet, die die mittige Vertiefung an der Stelle der Rotationsachse 9 umgibt, so dass die Balligkeit umlaufend (nach Art eines Ringes bzw. Torus) ausgebildet ist. Die torusballige Ausbildung der Stirnfläche 5 des Wälzkörpers 4 hat die Wirkung, dass ein Kontaktpunkt K mit einem Bord bzw. einer Bordscheibe (beispielsweise der Bordscheibe 6 des Ausführungsbeispiels in Fig. 1) radial weg von der parallel zu der Rotationsachse 9 liegenden Kante 10 versetzt ist. Es sei noch angemerkt, dass in Fig. 4 die Balligkeit des gekrümmten Abschnittes 8 übertrieben dargestellt wurde; in der Praxis steht der gekrümmte Abschnitt maximal nur wenige Mikrometer über einer (gedachten) ebenen Stirnfläche über, die senkrecht auf der Mantelfläche 7 steht.

Bei den beiden folgenden Ausführungsbeispielen sind gleicher oder in ihrer Wirkung vergleichbare Bestandteile mit gleichen Bezugszeichen versehen.

Das zweite, in Fig. 2 dargestellte Ausführungsbeispiel unterscheidet sich von dem ersten Ausführungsbeispiel darin, dass der Innenring 2 einteilig ausgebildet ist, so dass die Wälzkörper 4 beider Reihen auf dem gleichen Innenring 2 abrollen. Der Außenring 3 ist axial in zwei aneinander angeordnete Teilringe aufgeteilt.

Das dritte, in Fig. 3 dargestellte Ausführungsbeispiel ist der Außenring 3 einteilig ausgebildet, so dass die Wälzkörper 4 beider Reihen des Wälzlagers auf einem einzigen Lagerring, hier dem Außenring 3, abrollen. Der Innenring 2 ist zweiteilig ausgebildet und umfasst zwei axial benachbarte Teilringe.

Es versteht sich, dass das zweite und das dritte Ausführungsbeispiel in der Weise kombiniert werden können, dass beide Reihen von Wälzkörpern 4 auf einem gemeinsamen Außenring 3 (Fig. 3) und einem gemeinsamen Innenring 2 (Fig. 2) abrollen.

Die in Fig. 1 bis Fig. 3 dargestellten Ausführungsbeispiele zeigen jeweils nicht das Fettreservoir, das zwischen den beiden Lagerringen 2, 3 angeordnet ist. Im Bereich der Verengung nahe dem Kontaktpunkt K (Fig. 4) ist ein dünner Spalt ausgebildet, der der Förderung des Schmiermittels als schmierender Bestandteil des Fettreservoirs dient.

### Bezugszeichenliste

- 1: Radsatzlager
- 2: Innenring
- 3: Außenring
- 4: Wälzkörper
- 5: Stirnfläche des Wälzkörpers 4
- 6: Bordscheibe
- 7: Mantelfläche
- 8: gekrümmter Abschnitt der Stirnfläche 5
- 9: Rotationsachse des Wälzkörpers 4
- 10: Kante

## Patentansprüche

1. Lager, insbesondere Radsatzlager, speziell Radsatzlager für Bahnräder, umfassend
einen Innenring (2),
einen Außenring (3),
mindestens zwei Reihen von zylindrischen Wälzkörpern, und
eine Bordscheibe (6) an einer Stirnfläche (5) eines der beiden Lagerringe (2),
wobei die Wälzkörper (4) mindestens einer der beiden Reihen eine torusballige Stirnfläche (5) aufweisen, die an der Bordscheibe (6) an einem Kontaktpunkt (K) anliegt, wobei die torusballige Stirnfläche (5) eine randseitige, sphärisch gekrümmte Wulst aufweist, welche eine im Bereich eines Schnittpunktes einer Rotationsachse (9) des jeweiligen Wälzkörpers (4) mit der Stirnfläche (5) ausgebildete mittige Vertiefung umgibt, wobei ein die sphärische Krümmung der Wulst beschreibender Radius (R) um einen Betrag (e) von der Rotationsachse (9) des Wälzkörpers (4) beabstandet ist, und
wobei der Abstand zwischen dem Kontaktpunkt (K) und der Rotationsachse (9) größer als der Betrag (e) ist.

2. Lager nach Anspruch 1, weiter umfassend ein Fettreservoir für eine Fettschmierung.

3. Lager nach Anspruch 1 oder 2, **dadurch gekennzeichnet, dass** die Wälzkörper (4) beider Reihen auf dem gleichen Innenring (2) abrollen.

4. Lager nach einem der Ansprüche 1 bis 3, **dadurch gekennzeichnet, dass** die Wälzkörper (4) beider Reihen auf dem gleichen Außenring (3) abrollen.

5. Verwendung eines Lagers nach Anspruch 1 als Radsatzlager (1), insbesondere für Bahnradlager.

## Claims

1. Bearing, in particular wheelset bearing, specifically wheelset bearing for rail wheels, comprising
an inner ring (2),
an outer ring (3),
at least two rows of cylindrical rolling bodies, and
a flanged disc (6) on an end face (5) of one of the two bearing rings (2),
the rolling bodies (4) of at least one of the two rows having a toroidal end face (5) which bears against the flanged disc (6) at a contact point (K), the toroidal end face (5) having an edge-side, spherically curved bead which surrounds a central depression which is configured in the region of a point of intersection of a rotational axis (9) of the respective rolling body (4) with the end face (5), a radius (R) which describes the spherical curvature of the bead being spaced apart from the rotational axis (9) of the rolling body (4) by a value (e), and
the spacing between the contact point (K) and the rotational axis (9) being greater than the value (e).

2. Bearing according to Claim 1, further comprising a grease reservoir for a grease lubrication means.

3. Bearing according to Claim 1 or 2, **characterized in that** the rolling bodies (4) of the two rows roll on the same inner ring (2).

4. Bearing according to one of Claims 1 to 3, **characterized in that** the rolling bodies (4) of the two rows roll on the same outer ring (3).

5. Use of a bearing according to Claim 1 as a wheelset bearing (1), in particular for rail wheel bearings.

## Revendications

1. Palier, en particulier boîte d'essieu, spécifiquement boîte d'essieu pour roues ferroviaires, comprenant :
une bague intérieure (2),
une bague extérieure (3),
au moins deux rangées de corps de roulement cylindriques, et
un flasque (6) au niveau d'une surface frontale (5) de l'une des deux bagues de palier (2),
les corps de roulement (4) d'au moins l'une des deux rangées présentant au moins une surface frontale (5) en forme de tore bombé qui s'applique contre le flasque (6) au niveau d'un point de contact (K), la surface frontale en forme de tore bombé (5) présentant un bourrelet de courbure sphérique au niveau du bord, qui entoure un renfoncement central réalisé dans la région d'un point d'intersection d'un axe de rotation (9) du corps de roulement respectif (4) avec la surface frontale (5), un rayon (R) décrivant la courbure sphérique du bourrelet étant espacé d'une distance (e) de l'axe de rotation (9) du corps de roulement (4), et
la distance entre le point de contact (K) et l'axe de rotation (9) étant supérieure à la distance (e) .

2. Palier selon la revendication 1, comprenant en outre un réservoir de graisse pour un graissage de lubrification.

3. Palier selon la revendication 1 ou 2, **caractérisé en ce que** les corps de roulement (4) des deux rangées roulent sur la même bague intérieure (2).

4. Palier selon l'une quelconque des revendications 1 à 3, **caractérisé en ce que** les corps de roulement (4) des deux rangées roulent sur la même bague extérieure (3).

5. Utilisation d'un palier selon la revendication 1 en tant que boîtes d'essieu (1), en particulier pour des paliers de roues ferroviaires.
